(19) Europäisches Patentamt
European Patent Office
Office européen des brevets

(11) Veröffentlichungsnummer: **0 313 076 B1**

(12) **EUROPÄISCHE PATENTSCHRIFT**

(45) Veröffentlichungstag der Patentschrift: **26.02.92**

(51) Int. Cl.[5]: **C08F 110/02**, C08F 4/00

(21) Anmeldenummer: **88117584.8**

(22) Anmeldetag: **21.10.88**

(54) **Verfahren zur Homopolymerisation von Ethylen unter erhöhtem Druck.**

(30) Priorität: **22.10.87 DE 3735821**

(43) Veröffentlichungstag der Anmeldung:
**26.04.89 Patentblatt 89/17**

(45) Bekanntmachung des Hinweises auf die Patenterteilung:
**26.02.92 Patentblatt 92/09**

(84) Benannte Vertragsstaaten:
**BE DE ES FR GB IT NL SE**

(56) Entgegenhaltungen:
**EP-A- 0 002 764**
**EP-A- 0 003 735**

(73) Patentinhaber: **Peroxid-Chemie GmbH**
**Dr.-Gustav-Adolph-Strasse 2**
**W-8023 Höllriegelskreuth bei München(DE)**

(72) Erfinder: **Luft, Gerhard, Prof. Dr.**
**Ludwigstrasse 141 A**
**W-6109 Mühltal(DE)**
Erfinder: **Dorn, Maximilian, Dr.**
**Gistlstrasse 100 A**
**W-8023 Pullach(DE)**
Erfinder: **Fischer, Norbert**
**Bahnhofstrasse 46**
**W-6101 Rossdorf(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08 20**
**W-8000 München 86(DE)**

EP 0 313 076 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Ethylen Homopolymeren unter Verwendung eines Diphenylethanderivats als C-C-labilem Polymerisationsinitiator.

Verfahren zur Polymerisation von Ethylen unter erhöhtem Druck und erhöhter Temperatur sind in einer Reihe von Varianten bekannt. Zur Initiierung der Polymerisationsreaktion werden dem Ethylen Radikal-spendende Stoffe wie organische Peroxide, Sauerstoff oder andere Radikalbildner zugesetzt.

So beschreibt die US-PS 3,896,099 ein Verfahren zur Polymerisation von ethylenisch ungesättigten Monomeren, bei dem die Polymerisation durch freie Radikale initiiert wird, wobei als Initiator ein 1,1,2,2-Tetracarboalkoxy-diarylethan verwendet wird. Diese Verbindung muß in einer Menge von 0,01 bis 5% gegenüber den Reaktanten eingesetzt werden. Die Reaktionstemperatur liegt bei diesem Verfahren zwischen 40 und 200°C, die Dauer einer 50%igen Umsetzung beträgt etwa 30 Minuten. Die Nachteile dieses Verfahrens liegen darin, daß eine große Menge Initiator eingesetzt werden muß und die erforderliche Reaktionszeit für eine großtechnische Herstellung zu lange ist.

Die DE-OS 24 44 252 beschreibt ein Verfahren zur Ausführung von chemischen Reaktionen, die durch Radikale initiiert werden, wobei als radikalische Initiatoren 1,2-Diaryl-1,2-dicyano-1,2-dihalogenethan-Verbindungen verwendet werden. Die Reaktionstemperatur beträgt bei diesem Verfahren zwischen 40 und 200°C und auch hierbei ist es nötig, die radikalischen Initiatoren in Mengen von 0,01 bis 3 Gew.-% der umzusetzenden Verbindungen, also in relativ großen Mengen, zuzusetzen. Bei diesem Verfahren ist ebenfalls die Reaktionszeit sehr lange, nämlich abhängig vom eingesetzten Initiator für eine 50%ige Umsetzung zwischen 4 und 6 Stunden.

Weiterhin ist es bekannt, zur Initiierung von radikalischen Polymerisationen organische Peroxide zu benutzen. Diese zerfallen bei einer für jedes Peroxid charakteristischen Temperatur exotherm in Radikale, die die Polymerisation auslösen. Ein solcher exothermer Zerfall kann jedoch geradezu explosionsartig auftreten. Vor allem durch Verunreinigungen, wie z. B. Metallspäne oder Rost, können solche exothermen Zerfälle stark katalysiert werden. Auch durch Schlag, Stoß oder Reibung können organische Peroxide zur Explosion gebracht werden. Da es weiterhin bekannt ist, daß bei der Polymerisation bei steigenden Temperaturen auch die Ausbeute zunimmt, sind solche organischen Peroxide aufgrund der Explosionsgefahr bei erhöhter Temperatur als alleinige Initiatoren ungeeignet. Man gibt daher den organischen Peroxiden Substanzen zu, die ihre Gefährlichkeit herabsetzen. Diese Substanzen werden als Phlegmatisierungsmittel bezeichnet.

In der DE-OS 27 57 442 wird ein Verfahren zur Phlegmatisierung organischer Peroxide beschrieben, bei dem die organischen Peroxide als radikalische Polymerisationsinitiatoren in einer Mischung aus 1 bis 99 Gew.-% eines substituierten Diphenylethans und 99 bis 1 Gew.-% eines organischen Peroxids eingesetzt werden. Dies kann jedoch bei 2-Stufen-Polymerisationen, welche beispielsweise in einer ersten Stufe in einem niedrigeren Temperaturbereich und erst in einer zweiten Stufe in einem für das organische Peroxid gefährlichen Temperaturbereich durchgeführt werden, unbefriedigend sein.

Der Erfindung liegt daher die Aufgabe zugrunde, ein Verfahren zur Homopolymerisation von Ethylen zur Verfügung zu stellen, das die obengenannten Nachteile des Standes der Technik vermeidet und die Polymerisation auch im Temperaturbereich bis 400°C ermöglicht, wobei verschiedene Verbindungen als Polymerisationsinitiatoren je nach Bedarf zu unterschiedlichen Zeitpunkten im Reaktionsablauf eingesetzt werden können. Weiter besteht die Aufgabe der Erfindung in der Verhinderung einer Zersetzung des Ethylens bei der Polymerisation auch im oberen Temperaturbereich, Erhöhung der Ausbeute, Herabsetzung des Initiatorverbrauchs und Erzielung rein weißer Polymere.

Gelöst wird diese Aufgabe erfindungsgemäß durch ein Verfahren zur Herstellung von Ethylen Homopolymeren unter Verwendung eines Diphenylethan-Derivats als C-C-labilem Polymerisations-Initiator, welches dadurch gekennzeichnet ist, daß man als Polymerisations-Initiatoren bis zu 40 Mol einer Verbindung der allgemeinen Formel

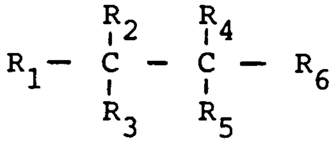

(I)

, in der $R_{1-6}$ H, geradkettiges oder verzweigtes Alkyl, Aryl, Aralkyl, Alkylaryl, substituiertes Alkyl, substituiertes Aryl, -CN, -COOH, Ester, Säurenitril, Alkoxy, Alkylsilyloxy mit 1 bis 4 C-Atomen, Arylsilyloxy oder

Halogen bedeuten, wobei jedes Alkyl 1 bis 10 C-Atome enthalten kann, und bis zu 40 Mol eines organischen Peroxids, Sauerstoff oder einer Azoverbindung, bezogen auf eine Million Mol eingesetztes Ethylen, verwendet und bei 60.000 bis 350.000 kPa und 130 bis 400 °C polymerisiert.

Das erfindungsgemäße Verfahren ermöglicht die Polymerisation unter Anwendung von organischen Peroxiden als Polymerisationsinitiatoren auch im Hochtemperaturbereich bis 400 °C, wodurch sich aufgrund der höheren Temperaturen auch höhere Ausbeuten von Polyethylen ergeben. Es ist hierbei nicht nötig, die Verbindung der Formel I und das organische Peroxid in Form einer Mischung zuzugeben, sondern es kann vielmehr bei einem Zweistufenprozeß die Polymerisation in der ersten Stufe bei einer Temperatur im unteren angegebenen Temperaturbereich allein mit dem organischen Peroxid durchgeführt werden und erst in der zweiten Stufe zum Weiterführen der Polymerisation bei einer Temperatur im oberen Teil des angegebenen Temperaturbereichs die C-C-labile Verbindung der Formel I zugegeben werden. Weiter ermöglicht das erfindungsgemäße Verfahren zusätzlich zu den Verbindungen der allgemeinen Formel I mit Sauerstoff oder einer Azoverbindung als Polymerisationsinitiatoren zu arbeiten.

Die benötigten Konzentrationen der beiden Initiatoren sind im erfindungsgemäßen Verfahren sehr niedrig. Der Gesamtinitiatorverbrauch liegt bei nur 0,15 bis 0,30 g Initiator pro kg Polyethylen. Ein weiterer Vorteil des erfindungsgemäßen Verfahrens ist, daß bei einer nur kurzen Reaktionszeit eine hohe Ausbeute an Polyethylen von 25 bis 50 % erreicht wird. Aufgrund der kurzen Reaktionszeiten können in einem kontinuierlich betriebenen Verfahren hohe Durchsatzraten erzielt werden. Eine Zersetzung des Ethylens wird im erfindungsgemäßen Verfahren ebenso verhindert wie eine Verfärbung des Produktes.

Im erfindungsgemäßen Verfahren enthalten als Reste $R_1$-$R_6$ sowohl die geradkettigen oder verzweigten, substituierten oder nicht-substituierten Alkylreste, als auch die in den Aralkyl-, Alkylaryl- oder Alkoxygruppen vorhandenen Alkylreste jeweils 1 bis 10 C-Atome. In der Bedeutung Ester für einen oder mehrere der Reste $R_1$-$R_6$ können sich diese von einer am Grundgerüst der Verbindung der Formel I befindlichen Carboxyl- oder OH-Gruppe ableiten, wobei bevorzugt Alkylester mit 1 bis 8 C-Atomen in der Alkylkette verwendet werden.

Weiter werden im erfindungsgemäßen Verfahren als Reste $R_1$-$R_6$ mit der Bedeutung Aryl insbesondere Phenyl oder Naphthyl verwendet. Substituierte Alkyle oder Aryle als einer oder mehrere der Reste $R_1$-$R_6$ sind bevorzugt mit Halogen, -OH, Alkoxy oder/und Ester ein- oder mehrfach substituiert. Für substituierte Aryle kommt desweiteren als Substituent Fluoren in Betracht.

Beispiele für Verbindungen der allgemeinen Formel I, zur Verwendung im erfindungsgemäßen Verfahren sind

2,3-Dimethyl-2,3-diphenylbutan,
2,3-Dipropyl-2,3-diphenylbutan,
2,3-Dibutyl-2,3-diphenylbutan,
2,3-Dihexyl-2,3-diphenylbutan,
2-Methyl-3-äthyl-2,3-diphenylbutan,
2-Methyl-2,3-diphenylbutan,
2,3-Dimethyl-2,3-di(p-methoxyphenyl)-butan,
2,3-Dimethyl-2,3-di(p-methylphenyl)-butan,
2,3-Dimethyl-2-methylphenyl-3-(p-2′,3′-dimethyl-3′-methylphenyl-butyl)-phenyl-butan,
3,4-Dimethyl-3,4-diphenylhexan,
3,4-Diäthyl-3,4-diphenylhexan,
3,4-Dipropyl-3,4-diphenylhexan,
4,5-Dipropyl-4,5-diphenyloctan,
2,3-Diisobutyl-2,3-diphenylbutan,
3,4-Diisobutyl-3,4-diphenylhexan,
2,3-Dimethyl-2,3-di-p(t-butyl)-phenyl-butan,
5,6-Dimethyl-5,6-diphenyldecan,
6,7-Dimethyl-6,7-diphenyldodecan,
7,8-Dimethyl-di(methoxyphenyl)-tetradecan,
Acetophenonpinakol,
Benzpinakol,
1,2-Dichlortetraphenyläthan,
Tetraphenylbernsteinsäuredinitril,
1,2-Dicyano-1,2-diphenylbernsteinsäuredinitril,
1,2-Dicyano-1,2-diphenylbernsteinsäureester,
Benzpinakolalkylether und
Benzpinakolsilylether.

Beispielhaft für im erfindungsgemäßen Verfahren verwendbare organische Peroxide sind:

a) Acetylcyclohexylsulfonylperoxide

b) Peroxydicarbonate wie
Dicyclohexyl-peroxydicarbonat
Di-2-ethylhexyl-peroxydicarbonat
Di-n-butyl-peroxydicarbonat
Di-isopropyl-peroxydicarbonat

c) Perester wie
tert.-Amylperpivalat
tert.-Butylperpivalat
tert.-Butyl-per-2-ethylhexanoat
tert.-Butyl-perneodecanoat
tert.-Butyl-perbenzoat

d) Diacylperoxide wie
Bis-(3,3,5-trimethylhexanonyl)-peroxid
Di-lauroylperoxid
Di-decanoylperoxid
Di-propionylperoxid
Bis-(2,4-dichlorbenzoyl)-peroxid
Dibenzoylperoxid

e) Dialkylperoxide wie
Dicumylperoxid
Di-tert.-amylperoxid
Di-tert.-butylperoxid
tert.-Butylcumylperoxid
Bis-(tert.-butylperoxy-isopropyl)-benzol

f) Perketale wie
1,1-Bis-(tert.-butylperoxy)-trimethyl-cyclohexan
1,1-Bis-(tert.-butylperoxy)-cyclohexan
2,2-Bis-(tert.-butylperoxy)-butan

g) Alkylhydroperoxide wie
Cumylhydroperoxid
tert.-Butylhydroperoxid

h) Ketonperoxide wie
Cyclohexanonperoxid
Methyl-ethyl-ketonperoxid
Methyl-isobutyl-ketonperoxid

In einer bevorzugten Ausführungsform der Erfindung polymerisiert man mit 3 bis 7 Mol Polymerisationsinitiator und 1 bis 5 Mol organischem Peroxid je eine Mio. Mol Ethylen. In einer weiteren bevorzugten Ausführungsform polymerisiert man mit 3 bis 7 Mol Polymerisationsinitiator und 15 bis 25 Mol Sauerstoff je eine Mio. Mol Ethylen.

In einer weiteren bevorzugten Ausführungsform wird die Polymerisation bei 300 bis 350 °C durchgeführt. Der bevorzugte Druckbereich im erfindungsgemäßen Verfahren ist 150.000 bis 200.000 kPa.

Es ist bei dem erfindungsgemäßen Verfahren außerdem möglich, der Reaktionsmischung weitere gewünschte Zusätze, insbesondere Molekulargewichtsregler, zuzusetzen. Zur Durchführung des erfindungsgemäßen Verfahrens eignen sich die für die Polymerisation von Ethylen unter erhöhtem Druck und erhöhter Temperatur üblicherweise angewandten Vorrichtungen und Verfahrensweisen, wie sie z. B. in "Ullmanns Enzyklopädie der technischen Chemie", Band 19, 4. Auflage, Seiten 167 bis 226, Verlag Chemie, dto. Band 3, 4. Auflage, Seiten 321 bis 326 oder Chem.-Ing.-Techn. 51 (1969), Seiten 960 bis 969 beschrieben sind.

In einer bevorzugten Ausgestaltung der Erfindung wird die Polymerisation in einem Rührautoklaven oder in einem Rohrreaktor, wie sie bei der kontinuierlichen Hochdruckpolymerisation üblich sind, durchgeführt, bei dem die Temperatur des eintretenden Ethylens über einen Wärmeaustauscher reguliert wird. Der Rührautoklav besitzt dabei bevorzugt eine Kammer mit einem Länge- zu Innendurchmesser-Verhältnis von 2:1.

Die Verweilzeit des Reaktionsgemisches im Reaktor beträgt bevorzugt 10 bis 120 sec., besonders bevorzugt 20 bis 60 sec. Diese kurze Verweilzeit im Reaktor ist ein großer Vorteil der Erfindung. Sie führt bei entsprechender Anlagengröße zu einer verbesserten Ausnützung der Anlagen und bei gegebener Anlagegröße damit zu einer erhöhten Produktion. Die Trennung von Polymerisat und nicht umgesetztem

Ethylen erfolgt in einer bevorzugten Ausführungsform der Erfindung durch Druckentspannung hinter dem Reaktor.

Nach dem erfindungsgemäßen Verfahren hergestellte Polyethylene können für alle Verwendungszwekke von Polyethylen eingesetzt werden. Auch das Erzielen rein weißer Polymere ist ein weiterer großer Vorteil des erfindungsgemäßen Verfahrens.

Die folgenden Beispiele erläutern die Erfindung weiter.

**Beispiel 1**

Dem Reaktor wird kontinuierlich ein auf 170.000 kPa komprimiertes Gemisch aus 1.000.000 Gewichtsteilen Ethylen/Stunde und 57 Gewichtsteilen 3,4-Dimethyl-3,4-diphenylhexan (CCDFH)/Stunde (entsprechend 6 Mol, bezogen auf 1 Million Mol Ethylen) sowie 12,4 Gewichtsteile Di-tert.-amylperoxid (DTAP)/Stunde (entsprechend 2 Mol, bezogen auf 1 Million Mol Ethylen) zugeführt. Bei einer Temperatur im Reaktor von 347 °C werden 414.000 Gewichtsteile Polyethylen/Stunde erhalten. Je Kilogramm gebildetes Polyethylen wurden insgesamt 0,17 g der Initiatoren eingesetzt.

**Beispiel 2**

Dem Reaktor wird kontinuierlich ein auf 170.000 kPa komprimiertes Gemisch aus 1.000.000 Gewichtsteilen Ethylen/ Stunde und 38 Gewichtsteilen 3,4-Dimethyl-3,4-diphenylhexan (CCDFH)/Stunde (entsprechend 4 Mol, bezogen auf 1 Million Mol Ethylen) sowie 12,4 Gewichtsteile Di-tert.- amylperoxid (DTAP)/Stunde (entsprechend 2 Mol, bezogen auf 1 Million Mol Ethylen) zugeführt.

Bei einer Temperatur im Reaktor von 305 °C werden 270.000 Gewichtsteile Polyethylen erhalten. Je Kilogramm gebildetes Polyethylen wurden insgesamt 0,19 g der Initiatoren eingesetzt.

**Beispiel 3**

Dem Reaktor wird kontinuierlich ein auf 170.000 kPa komprimiertes Gemisch aus 1.000.000 Gewichtsteilen Ethylen/Stunde und 38 Gewichtsteile 3,4-Dimethyl-3,4-diphenylhexan (CCDFA)/Stunde (entsprechend 4 Mol, bezogen auf 1 Million Mol Ethylen) sowie 23 Gewichtsteile Sauerstoff ($O_2$)/Stunde (entsprechend 20 Mol, bezogen auf 1 Million Mol Ethylen) zugeführt. Bei einer Polymerisationstemperatur von 310 °C werden 295.000 Gewichtsteile Polyethylen erhalten. Je Kilogramm gebildetes Polyethylen wurden insgesamt 0,21 g der Initiatoren zudosiert.

Vergleichsbeispiel 1A

Dem Reaktor wird kontinuierlich ein auf 170.000 kPa komprimiertes Gemisch aus 1.000.000 Gewichtsteilen Ethylen/Stunde und 93 Gewichtsteilen Tert.-amylperneodecanoat (TAPND)/Stunde (entsprechend 10 Mol bezogen auf 1 Million Mol Ethylen) sowie 57 Gewichtsteilen Sauerstoff ($O_2$)/Stunde (entsprechend 50 Mol, bezogen auf 1 Million Mol Ethylen) zugeführt. Bei einer Temperatur von 252 °C im Reaktor werden 139.000 Gewichtsteile Polyethylen erhalten. Je Kilogramm gebildetes Polyethylen wurden insgesamt 1,1 g Initiator eingesetzt.

Vergleichsbeispiel 2A

Es wird genauso verfahren wie im Vergleichsbeispiel 1A, mit dem Unterschied, daß anstelle des t-Amylperneodecanoats 52 Gewichtsteile Di-tert.-butylperoxid (DTBP)/Stunde (entsprechend 10 Mol, bezogen auf 1 Million Mol Ethylen) und 42 Gewichtsteile Sauerstoff (02)/Stunde (entsprechend 37 Mol, bezogen auf 1 Million Mol Ethylen) zudosiert werden. Bei einer Temperatur von 281 °C im Reaktor werden 231.000 Gewichtsteile Polyethylen erhalten. Je Kilogramm gebildetes Polyethylen wurden insgesamt 0,4 g Initiator eingesetzt.

Tabelle 1

| Beispiel | 1 | 2 | 3 |
|---|---|---|---|
| Initiator 1 | CCDFH | CCDFH | CCDFH |
| Konzentration an Initiator 1 im Eingang (mol ppm) | 6 | 4 | 4 |
| Initiator 2 | DTAP | DTAP | $O_2$ |
| Konzentration an Initiator 2 im Eingang (mol ppm) | 2 | 2 | 20 |
| Druck (kPa) | 170.000 | 170.000 | 170.000 |
| Reaktortemperatur (° C) | 347 | 305 | 310 |
| Reaktormanteltemperatur (° C) | 215 | 190 | 195 |
| Verweilzeit (sec.) | 30 | 30 | 30 |
| Ausbeute an Polyethylen (%) | 41,4 | 27,0 | 29,5 |
| Gesamtinitiatorverbrauch (g I/kg PE) | 0,17 | 0,19 | 0,21 |

Tabelle 2

| Vergleichsbeispiel | 1A | 2A |
|---|---|---|
| Initiator 1 | TAPND | DTBP |
| Konzentration an Initiator 1 im Eingang (mol ppm) | 10 | 10 |
| Initiator 2 | $O_2$ | $O_2$ |
| Konzentration an Initiator 2 im Eingang (mol ppm) | 50 | 37 |
| Druck (kPa) | 170.000 | 170.000 |
| Reaktortemperatur (° C) | 252 | 281 |
| Reaktormanteltemperatur (° C) | 170 | 210 |
| Verweilzeit (sec.) | 40 | 40 |
| Ausbeute an Polyethylen (%) | 13,9 | 23,1 |
| Gesamtinitiatorverbrauch (g I/kg PE) | 1,1 | 0,4 |

**Patentansprüche**

1. Verfahren zur Herstellung von Ethylen Homopolymeren unter Verwendung eines Diphenylethan-Derivats als C-C-labilem Polymerisations-Initiator, **dadurch gekennzeichnet,** daß man als Polymerisations-Initiatoren bis zu 40 Mol einer Verbindung der allgemeinen Formel

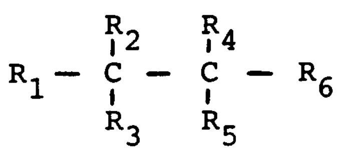

(I)

, in der $R_{1-6}$ H, geradkettiges oder verzweigtes Alkyl, Aryl, Aralkyl, Alkylaryl, substituiertes Alkyl, substituiertes Aryl, -CN, -COOH, Ester, Säurenitril, Alkoxy, Alkylsilyloxy mit 1 bis 4 C-Atomen, Arylsilyloxy oder Halogen bedeuten, wobei jedes Alkyl 1 bis 10 C-Atome enthalten kann, und bis zu 40 Mol eines organischen Peroxids, Sauerstoff oder einer Azoverbindung, bezogen auf eine Million Mol eingesetztes Ethylen, verwendet und bei 60.000 bis 350.000 kPa und 130 bis 400° C polymerisiert.

2. Verfahren nach Anspruch 1, **dadurch gekennzeichnet,** daß Alkyl oder Aryl mit Halogen, -OH, Alkoxy oder/und Ester einoder mehrfach substituiert ist.

3. Verfahren nach Anspruch 1 oder 2, **dadurch gekennzeichnet,** daß man mit 3 bis 7 Mol Polymerisations-Initiator der Formel I und 1 bis 5 Mol organischem Peroxid pro eine Mio. Mol Ethylen polymerisiert.

4. Verfahren nach Anspruch 1, **dadurch gekennzeichnet,** daß man mit 3 bis 7 Mol Polymerisations-Initiator der Formel I und 15 bis 25 Mol Sauerstoff pro eine Mio. Mol Ethylen polymerisiert.

5. Verfahren nach Anspruch 1, **dadurch gekennzeichnet,** daß man bei 300 bis 350 °C polymerisiert.

6. Verfahren nach einem der Ansprüche 1 bis 5, **dadurch gekennzeichnet,** daß man bei 150.000 bis 200.000 kPa polymerisiert.

7. Verfahren nach Anspruch 1, **dadurch gekennzeichnet,** daß man der Reaktionsmischung zusätzlich Molekulargewichtsregler zusetzt.

8. Verfahren nach einem der Ansprüche 1 bis 7, **dadurch gekennzeichnet,** daß man die Polymerisation in einem Rührautoklaven oder Rohrreaktor durchführt, bei dem die Temperatur des eintretenden Ethylens über einen Wärmeaustauscher reguliert wird.

9. Verfahren nach Anspruch 8, **dadurch gekennzeichnet,** daß die Verweilzeit des Reaktionsgemisches im Reaktor 10 sec. bis 120 sec. beträgt.

10. Verfahren nach Anspruch 9, **dadurch gekennzeichnet,** daß die Verweilzeit des Reaktionsgemisches im Reaktor 20 bis 60 Sekunden beträgt.

11. Verfahren nach einem der Ansprüche 1 bis 10, **dadurch gekennzeichnet,** daß die Trennung von Polymerisat und nicht umgesetztem Ethylen durch Druckentspannung hinter dem Reaktor erfolgt.

## Claims

1. Process for the production of ethylene homopolymers with the use of a diphenylethane derivative as C-C labile polymerisation initiator, characterised in that, as polymerisation initiator, one uses up to 40 mole of a compound of the general formula:-

$$\begin{array}{ccccccc} & & R_2 & & R_4 & & \\ & & | & & | & & \\ R_1 & - & C & - & C & - & R_6 \\ & & | & & | & & \\ & & R_3 & & R_5 & & \end{array} \qquad (I)$$

in which $R_{1-6}$ signify H, straight-chained or branched alkyl, aryl, aralkyl, alkylaryl, substituted alkyl, substituted aryl, -CN, -COOH, ester, acid nitrile, alkoxy, alkylsilyloxy with 1 to 4 C-atoms, arylsilyloxy or halogen, whereby each alkyl can contain 1 to 10 C-atoms, and up to 40 moles of an organic peroxide, oxygen or of an azo compound, referred to one million moles of ethylene used, and polymerises at 60,000 to 350,000 kPa and 130 to 400 °C.

2. Process according to claim 1, characterised in that alkyl or aryl is substituted one or more times with halogen, OH, alkoxy and/or ester.

3. Process according to claim 1 or 2, characterised in that one polymerises with 3 to 7 moles of polymerisation initiator of the formula I and 1 to 5 moles of organic peroxide per one million moles of ethylene.

4. Process according to claim 1, characterised in that one polymerises with 3 to 7 moles of polymerisation initiator of the formula I and 15 to 25 moles of oxygen per one million moles of ethylene.

5. Process according to claim 1, characterised in that one polymerises at 300 to 350 °C.

6. Process according to one of claims 1 to 5, characterised in that one polymerises at 150,000 to 200,000 kPa.

7. Process according to claim 1, characterised in that one additionally adds molecular weight regulators to the reaction mixture.

8. Process according to one of claims 1 to 7, characterised in that one carries out the polymerisation in a stirrer autoclave or stirrer reactor in which the temperature of the entering ethylene is regulated via a heat exchanger.

9. Process according to claim 8, characterised in that the residence time of the reaction mixture in the reactor amounts to 10 to 120 sec.

10. Process according to claim 9, characterised in that the residence time of the reaction mixture in the reactor amounts to 20 to 60 sec.

11. Process according to one of claims 1 to 10, characterised in that the separation of polymer and unreacted ethylene takes place by pressure release beyond the reactor.

**Revendications**

1. Procédé de préparation d'homopolymères de l'éthylène utilisant comme amorceur de polymérisation à liaison C-C labile un dérivé du diphényléthane, caractérisé en ce que l'on utilise comme amorceurs de polymérisation jusqu'à 40 moles d'un composé de formule générale

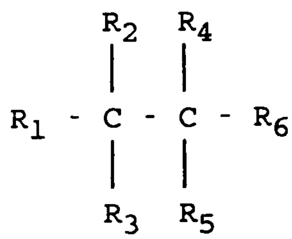

(I)

dans laquelle les groupes $R_{1-6}$ représentent H, un groupe alkyle linéaire ou ramifié, un groupe aryle, aralkyle, alkylaryle, alkyle substitué, aryle substitué, -CN, -COOH, ester, nitrile d'acide, alcoxy, alkylsilyloxy avec 1 à 4 atomes de carbone, arylsilyloxy ou un halogène, chaque groupe alkyle pouvant contenir 1 à 10 atomes de carbone, et jusqu'à 40 moles d'un peroxyde organique, d'oxygène ou d'un composé azoïque, par million de moles d'éthylène utilisé, et en ce que l'on réalise la polymérisation entre 60000 et 350000 kPa et entre 130 et 400 °C.

2. Procédé selon la revendication 1, caractérisé en ce que le groupe alkyle ou aryle est substitué une ou plusieurs fois par un halogène, -OH, un groupe alcoxy et/ou ester.

3. Procédé selon la revendication 1 ou 2, caractérisé en ce que l'on polymérise avec 3 à 7 moles d'amorceur de polymérisation de formule I et 1 à 5 moles de peroxyde organique par million de moles d'éthylène.

4. Procédé selon la revendication 1, caractérisé en ce que l'on polymérise avec 3 à 7 moles d'amorceur de polymérisation de formule I et 15 à 25 moles d'oxygène par million de moles d'éthylène.

5. Procédé selon la revendication 1, caractérisé en ce que l'on polymérise entre 300 et 350 °C.

6. Procédé selon l'une des revendications 1 à 5, caractérisé en ce que l'on polymérise entre 150000 et 200000 kPa.

7. Procédé selon la revendication 1, caractérisé en ce que l'on ajoute en outre un régulateur de poids moléculaire au mélange réactionnel.

8. Procédé selon l'une des revendications 1 à 7, caractérisé en ce que l'on réalise la polymérisation dans un autoclave à agitation ou dans un réacteur tubulaire dans lequel la température de l'éthylène entrant

est régulée grâce à un échangeur de chaleur.

**9.** Procédé selon la revendication 8, caractérisé en ce que le temps de séjour du mélange réactionnel dans le réacteur est de 10 à 120 s.

**10.** Procédé selon la revendication 9, caractérisé en ce que le temps de séjour du mélange réactionnel dans le réacteur est de 20 à 60 secondes.

**11.** Procédé selon l'une des revendications 1 à 10, caractérisé en ce que la séparation du polymère d'avec l'éthylène qui n'a pas réagi se fait par détente à l'aval du réacteur.